# EUROPEAN PATENT APPLICATION

(11) **EP 1 316 260 A1**
(43) Date of publication of application: **04.06.2003**
(21) Application number: 02024757.3
(22) Date of filing: 06.11.2002
(51) Int. Cl.: A23P 1/08, A47G 21/00, B26B 3/00, B65D 65/46, A61C 15/02

(54) **Adminicle for drinking and eating, and its manufacturing process**

(30) Priority: 08.11.2001 JP 2001379305
(71) Applicant: EYM International, Gardena, CA 90247 (US); Momose, Emiko, Gardena, CA 90247 (US)
(72) Inventor: Momose, Emiko, Gardena, CA 90247 (US)
(74) Representative: EGLI-EUROPEAN PATENT ATTORNEYS

(57) **Abstract**

To create an adminicle (11) for drinking and eating and its manufacturing process even if teeth stick or simple knives or forks are eaten or swayed by livestock by accident, they don't do harm, if anything, help livestock's metabolism and health care of the livestock.

This is made by four processes as follows: the first process is mixing organic solvent, protein, baking powder, and artificial sweetener (few for each); the second process is putting the mixture mixed by the previous process into water heated to a certain temperature, and levigating it by beating it, then kneading more together with corn's starch; the third process is getting the mixture through an extrusion machine kept at constant temperature with casting the mixture into desirable shape by getting it through the mold kept at certain temperature as it is mentioned before; the fourth process is coagulating the mixture by cooling down the adminicle for drinking and eating itself shaped by the third process.

## Description

### [Background of the invention & Summary of invention]

### [Field of the Invention]

The present invention relates to an adminicle for drinking and eating made of a harmless substance even if it is eaten by farm animals that can apply to disposable teeth sticks, knives, and forks. And also, it relates to its manufacturing process.

### [Description of the Related Art]

Historically, teeth sticks and skewers used for various type of pottery have been made of bamboo or wood. In addition, disposal "knives", "folks", and "spoons" have been generally made of relatively hard synthetic resins.

Meanwhile, "leftover meals" are generally used as livestock feed as-is.

However, teeth sticks or folks said above can be mixed in the leftover meals and eaten coincidentally by the livestock. In this case, these items have had high possibility to pierce "inner mouth", "esophagus", and "stomach" of the livestock. Therefore, we have separated house rubbish according to type such as combustible material or non-combustible material, or inadequate material for livestock food. Though, this process is very difficult to do and hard to separate precisely.

In addition, because disposal "knives", "folks", and "spoons" made of synthetic resins are impossible to be festered, the process to handle such industrial waste becomes a big social problem.

As a conclusion of the inventor's fully worked-out tryout of founding the way to prevent from this kind of accident, she has finally achieved to provide the adminicle for drinking and eating made of not only of healthy substances rather than a harmless substance even if it is carelessly eaten by livestock. She also achieved to suggest its manufacturing process.

Furthermore, the adminicle for drinking and eating provided by the present invention can become manure which will contribute for the growth of plants by a process of decay such as disintegration or liquefaction that takes certain amount of time, even when it is thrown out.

The other characteristic of the present invention is that the body of the adminicle for drinking and eating is mainly made of cereal.

The other characteristic of the present invention is that the cereal belongs to a "corn category".

The other characteristic of the present invention is that the cereal belongs to a "potato category" such as tapioca or ocarina.

The other characteristic of the present invention is that this is made by heating and casting a mixture of 80%∼95% of the corn' s starch and certain amount of water and other mixtures.

The other characteristic of the present invention is that this is made by heating and casting a mixture of 80%∼95% of starch of the potatoes such as tapioca or ocarina, and certain amount of water and other mixtures.

The other characteristic of the present invention is that the first process is mixing organic solvent, protein, baking powder, and artificial sweetener (few for each); the second process is putting the mixture mixed by the previous process into water heated to a certain temperature, and levigating it by beating it, then kneading more together with corn' s starch; the third process is getting the mixture through an extrusion machine kept at constant temperature with casting the mixture into desirable shape by getting it through the mold kept at certain temperature as it is mentioned before; the fourth process is coagulating the mixture by cooling down the adminicle for drinking and eating itself shaped by the third process.

The other characteristic of the present invention is making the same kind of an adminicle for drinking and eating as mentioned in the previous section by mixing and working out the previous mixture with "potatoes" such as tapioca, and sweet-potatoes.

In addition, the adminicle for drinking and eating of the present invention itself includes cleaning things such as teeth sticks used after eating, adminicle for beating such as muddlers or stirs, devices for eating such as spoons, knives, cups, and dishes, and caddies for soy sauce, and dressing. All of them are within the technical category of the present invention.

### [Brief Description of the Drawings]

Fig. 1 is an edge view of mouth cleaning things used after eating.
Fig. 2 is an edge view of beating things used for mixing and beating foods and drinks.
Fig. 3 is an edge view of devices for eating.
Fig. 4 is an edge view of devices for eating and drinking.
Fig. 5 is an edge view of caddies.

### [Explanations of signs]

A: main unit of the adminicle for drinking and eating
11: teeth sticks
12: teeth sticks with string
13: cotton swab
14: paddles
21: muddler
22: muddler
23: stir
31: simple spoon
32: simple folk
33: simple knife
41: fulcrums
42: cup
43: dish
44: bowl
45: filter paper
51: caddy of soy sauce, and sauce
52: caddy of dressing

### [Description of the Preferred Embodiments]

The present invention is more specifically explained by means of the following examples, but is not limited only to these examples:
1. First, the first process is mixing uniformly 1∼2% of polyvinyl alcohol as an organic solvent and 0.3∼0.7% of protein, 1∼5% of alum as baking powder, 1∼5% of sorbitol as an artificial sweetener, and 1/5∼1/10 of water.
2. As a second process, putting and beating into gruel the mixture mixed by the first process into water heated by temperatures of around 90 degree centigrade, then adding and beating approximately 90% of corn's starch.
3. As a third process, getting the mixture mentioned in the previous section through an extrusion machine kept at temperatures of 130 degree centigrade with casting the mixture into desirable shape by getting it through the mold kept at temperatures of 130 degree centigrade.
4. As a fourth process, coagulating arbitrary goods casted by the third process by putting it into cooling mold whose temperature is kept at around 50 degrees below zero centigrade; this is a completion of process to create an adminicle for drinking and eating.
In addition, we could create an adminicle for drinking and eating in good condition by substituting "corn's starch" for "approximately 90% of tapioca".

### [Embodiment 1]

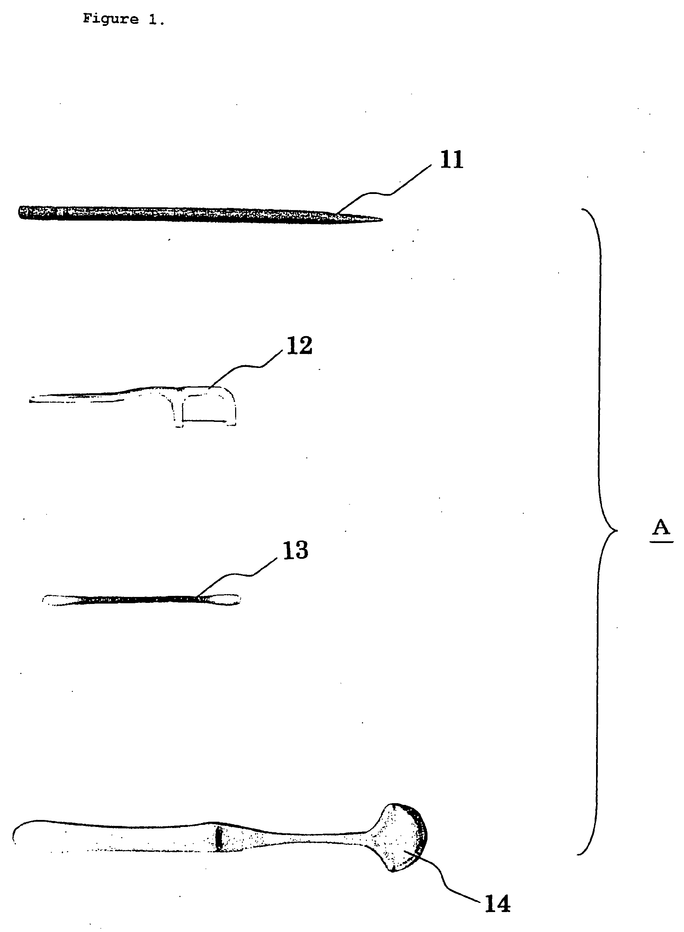

We shaped an adminicle for drinking and eating (A) containing potato such as corns, tapioca, and sweet potato in major proportions obtained by the above processes into a teeth stick (11) as shown in Figure 1. Consequently, the object to clean teeth after eating was achieved sufficiently, and we confirmed no problem occurred when it was given to livestock such as pigs or cows by accident.

In addition, the figure (12) is what we call "teeth sticks with string" used to clean interdentiums. All part but the string part is made of the adminicle for drinking and eating (A) made by the process mentioned before. Also, (13) is what we call "cotton swab" used to clean lugholes. All part but the cotton part is made of the adminicle for drinking and eating (A) made by the process mentioned before. (14) is what we call "paddles" used to clean one's tongue. In any case, the function of them is sufficient and it occurs no problem even when it is given to livestock. They become soft within certain time, and finally it becomes perishing as well as regular foods after letting it lay for a long time.

### [Embodiment 2]

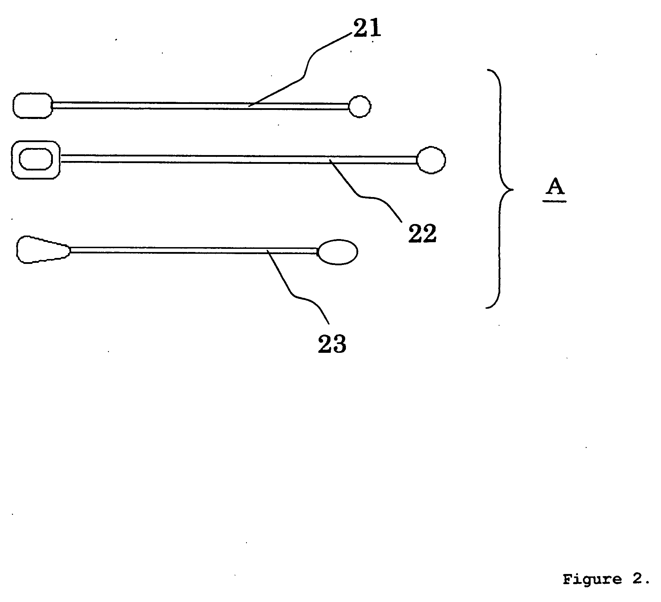

(21) (22) of Figure 2 are a muddler traditionally made of synthetic resins. (23) is what we call "stir", an adminicle for drinking used to beat drinks. We took potatoes such as corn, tapioca, and sweet potato as key ingredient, and joined them to create it. We confirmed beneficial effect as well as previous section.

### [Embodiment 3]

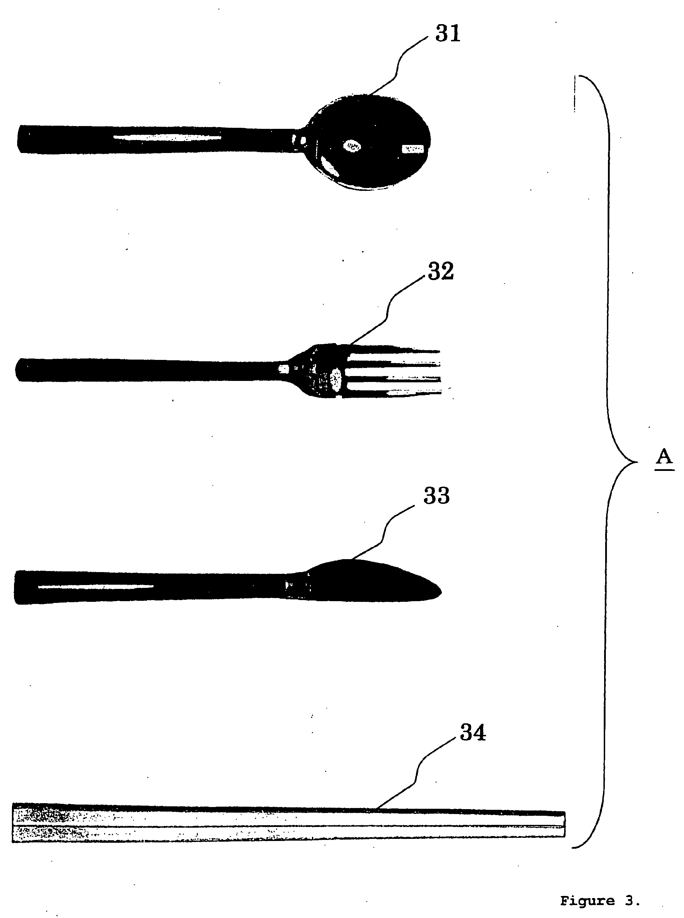

Figure 3 shows a simple spoon (31), a simple folk (32), and a simple knife (33) traditionally made of synthetic resins or wood. We also took potatoes such as corn, tapioca, and sweet potato as key ingredient, and joined them to create it. We confirmed beneficial effect as well as previous section. 0025

### [Embodiment 4]

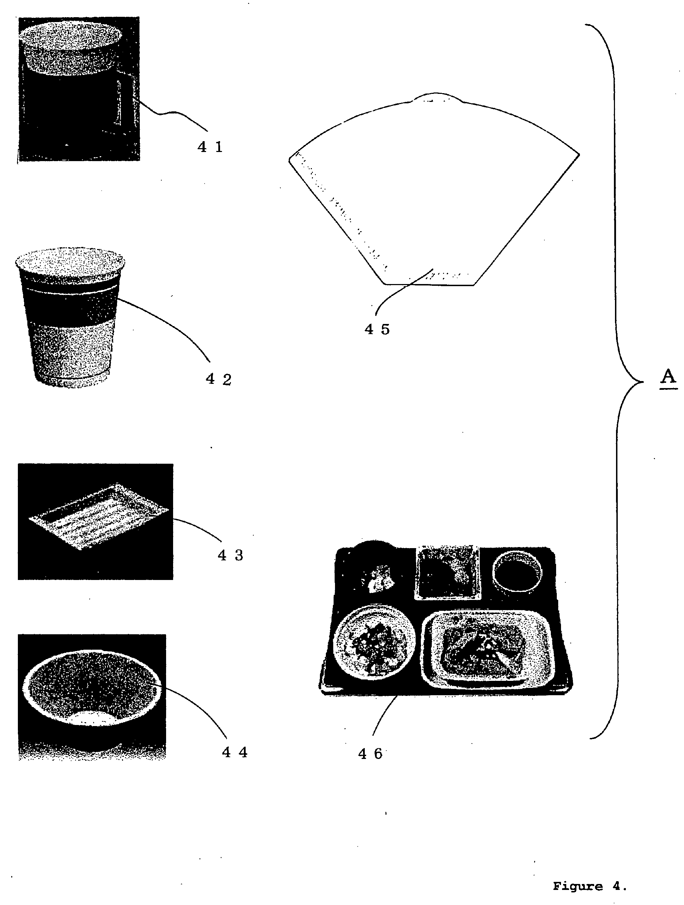

Figure 4 shows items for eating and drinking traditionally made of synthetic resins or coolite or paper. (41) is a pedestal for cups, (42) is a cup, (43) is a dish, (44) is a bowl, and (45) is a piece of filter paper used for dripping coffee and things like that. Each product corresponds to the object and effect of the present invention.

### [Embodiment 5]

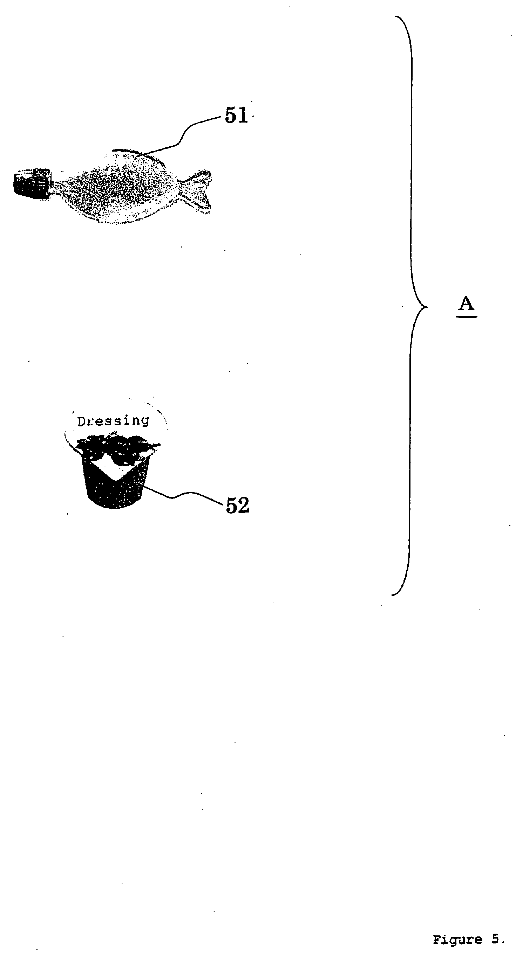

Figure 5 shows relatively small caddie of sauce or soy sauce (51), and caddies of dressing (52). We took potatoes such as corn, tapioca, and sweet potato as key ingredient of these products. Consequently, they become product enough to achieve the present invention's object and effect.

### [Effects of the invention]

As already stated in detail, even if an adminicle for drinking and eating such as teeth stick or simple knives or folks are eaten by livestock by accident, they don't do harm. If anything, because the adminicle is made of starch and includes fiber, the present invention helps livestock's metabolism and health care of the livestock.

In addition, the adminicle created by the process of the present invention will be perished by putrefactive bacteria with an elapse of the time even when it is thrown out or thrown out by livestock's bodily function. Therefore, it helps to prevent industrial waste pollutions.

In case this is used as manure, of course it helps soil improvement and crop growth.

## Claims

1. An adminicle for drinking and eating and a manufacturing process of the adminicle whose characteristic is the primary ingredient is cereals.

2. An adminicle for drinking and eating whose characteristic is that the cereal, the primary ingredient which is mentioned in the first claim, is "zea", and a manufacturing process of the adminicle.

3. An adminicle for drinking and eating whose characteristic is that the cereal, the primary ingredient which is mentioned in the first claim, is "potatoes" such as tapioca, and a manufacturing process of the adminicle.

4. An adminicle for drinking and eating and a manufacturing process of the adminicle whose characteristic is the process consists three processes as follows: adding water and other mixture to 80%∼95% of the starch of zea which is mentioned in the second claim, heating, and casting.

5. An adminicle for drinking and eating and a manufacturing process of the adminicle whose characteristic is the process consists three processes as follows: adding water and other mixture to 80%∼95% of the starch of potatoes such as tapioca or sweet potatoes which is mentioned in the third claim, heating, and casting.

6. An adminicle for drinking and eating and a manufacturing process of the adminicle whose characteristic is that the first process to create is mixing organic solvent, protein, baking powder, and artificial sweetener (few for each); the second process is putting the mixture mixed by the previous process into water heated to a certain temperature, and levigating it by beating it, then kneading more together with corn's starch; the third process is getting the mixture through an extrusion machine kept at constant temperature with casting the mixture into desirable shape by getting it through the mold kept at certain temperature as it is mentioned before; the fourth process is coagulating the mixture by cooling down the adminicle itself shaped by the third process.

7. An adminicle for drinking and eating and a manufacturing process of the adminicle whose characteristic is that the first process to create is mixing organic solvent, protein, baking powder, and artificial sweetener (few for each); the second process is putting the mixture mixed by the previous process into water heated to a certain temperature, and levigating it by beating it, then kneading more together with starch of potatoes such as tapioca or sweet potatoes; the third process is getting the mixture through an extrusion machine kept at constant temperature with casting the mixture into desirable shape by getting it through the mold kept at certain temperature as it is mentioned before; the fourth process is coagulating the mixture by cooling down the adminicle itself shaped by the third process.

8. An adminicle for drinking and eating and a manufacturing process of the adminicle shown from claim 1 to claim 7 whose characteristic is the adminicle mentioned before is cleaning items mainly used after eating such as teeth sticks or interdentium cleaners.

9. An adminicle for drinking and eating and a manufacturing process of the adminicle shown from claim 1 to claim 8 whose characteristic is the adminicle mentioned before is a preventer for beating such as muddlers and stirs.

10. An adminicle for drinking and eating and a manufacturing process of the adminicle shown from claim 1 to claim 9 whose characteristic is the adminicle mentioned before is an item for eating such as simple spoon, folks, knives, and chopsticks.

11. An adminicle for drinking and eating and a manufacturing process of the adminicle shown from claim 1 to claim 10 whose characteristic is the adminicle mentioned before is an item for eating and drinking such as cups, pedestal for cups, dishes, bowls, and trays.

12. An adminicle for drinking and eating and a manufacturing process of the adminicle shown from claim 1 to claim 11 whose characteristic is the adminicle mentioned before is a caddy for foods or seasoning such as caddies soy sauce, and dressing.
